Europäisches Patentamt

European Patent Office

Office européen des brevets

(19)

(11) **EP 0 823 776 B1**

(12) **FASCICULE DE BREVET EUROPEEN**

(45) Date de publication et mention
de la délivrance du brevet:
**14.11.2001 Bulletin 2001/46**

(51) Int Cl.⁷: **H02P 21/00**

(21) Numéro de dépôt: **97401652.9**

(22) Date de dépôt: **09.07.1997**

(54) **Procédé de freinage pour un moteur électrique et dispositif de mise en oeuvre**

Bremsverfahren für einen elektrischen Motor und Vorrichtung zur Durchführung

Braking process for an electric motor and device for performing

(84) Etats contractants désignés:
**CH DE DK GB IT LI SE**

(30) Priorité: **29.07.1996 FR 9609624**

(43) Date de publication de la demande:
**11.02.1998 Bulletin 1998/07**

(73) Titulaire: **Schneider Electric Industries SA**
**92500 Rueil-Malmaison (FR)**

(72) Inventeurs:
 • **Chouffier, Jean-Louis**
 **27120 Menilles (FR)**
 • **Duclos, Pascal**
 **75013 Paris (FR)**

(56) Documents cités:
 **EP-A- 0 310 131**     **US-A- 5 272 429**

 • **PATENT ABSTRACTS OF JAPAN vol. 006, no. 222 (E-140) 06 Novembre 1982 & JP 57 126 290 A (TOKYO SHIBAURA DENKI KK) 05 Août 1982**
 • **UMANAND L ET AL: "OPTIMAL AND ROBUST DIGITAL CURRENT CONTROLLER SYNTHESIS FOR VECTOR-CONTROLLED INDUCTION MOTOR DRIVE SYSTEMS" I.E.E. PROCEEDINGS: ELECTRIC POWER APPLICATIONS, vol. 143, no. 2, 1 mars 1996, pages 141-150, XP000620241**

## Description

La présente invention concerne un procédé de freinage d'un moteur polyphasé au moyen d'un gradateur relié d'une part à un réseau alternatif, d'autre part au moteur, et comprenant un circuit de commande et des interrupteurs électroniques associés aux différentes phases et pilotés par le circuit de commande.

Un gradateur est un variateur de courant souvent utilisé en association avec un moteur pour démarrer ou pour décélérer celui-ci de manière progressive, ou encore pour le freiner promptement.

Il est connu pour freiner un moteur à courant alternatif d'injecter du courant continu dans le stator du moteur dont l'alimentation à partir du réseau a été préalablement interrompue. A cette fin, on utilise en association avec le gradateur un dispositif de type hacheur comportant un interrupteur électromécanique ou électronique et une diode de décharge. Cependant ces composants de puissance supplémentaires augmentent le coût du dispositif de mise en oeuvre du procédé de freinage. En outre, ce type de dispositif peut entraîner un échauffement du moteur notamment lors d'un long freinage.

*Par ailleurs, le document EP A 0310131 présente un procédé et un système de freinage d'un moteur électrique dans lequel on détecte la polarité de la tension contre-électromotrice provenant du moteur ainsi que la polarité de la tension d'alimentation alimentant le moteur. Ces détections ne fournissent cependant que deux signaux binaires suivant que chacune des tensions est positive ou négative, ce qui ne donne pas une grande précision sur leurs positions relatives et limite donc l'efficacité d'un tel freinage.*

L'invention a donc pour but d'améliorer un procédé de freinage qui limite le risque d'échauffement du moteur et qui n'engendre pas de frais additionnels importants pour son dispositif de mise en oeuvre.

Selon l'invention, le procédé de freinage est caractérisé en ce qu'il consiste à déterminer la position du flux rotorique du moteur, *ce flux rotorique pouvant présenter six positions distinctes sur une période de rotation du moteur,* à déterminer la position potentielle du courant statorique du moteur, *ce courant statorique pouvant lui aussi présenter six positions distinctes sur une période du réseau,* à comparer la position potentielle du courant statorique avec la position du flux rotorique pour en déduire une valeur d'écart de position et à commander la conduction des interrupteurs électroniques lorsque le couple électromagnétique est déterminé négatif.

Selon une caractéristique, le couple électromagnétique est déterminé négatif à partir de l'évaluation de la valeur d'écart de position et de la mesure de la vitesse du moteur, *au moyen d'une table interne qui effectue une correspondance entre les valeurs d'écart de position et de mesure de vitesse, pour déterminer si le couple électromagnétique est négatif.*

Selon une autre caractéristique, la position du flux rotorique est déterminée à partir de la mesure des tensions statoriques sur chacune des phases du moteur en l'absence du courant.

La position potentielle du courant statorique est avantageusement déterminée à partir du passage par zéro de la tension simple d'une phase du réseau, de la polarité de cette tension simple, du retard à l'amorçage synchronisé sur cette tension ainsi que du sens de rotation du réseau.

Le dispositif de freinage pour la mise en oeuvre du procédé comprend un bloc de synchronisation, un bloc d'estimation de la position potentielle du courant statorique, un bloc d'estimation de la position du flux rotorique, un bloc comparateur de la position potentielle du courant statorique et de la position du flux rotorique et un bloc de validation de la commande des interrupteurs électroniques.

La description faite ci-après en regard des dessins fera ressortir les caractéristiques et avantages de l'invention. Aux dessins annexés:

- la figure 1 est un schéma fonctionnel du dispositif de mise en oeuvre du procédé de freinage selon l'invention

- la figure 2 est une représentation dans le temps des courants statoriques dans les phases du moteur et de la tension sur une phase du réseau ;

- la figure 3 est un diagramme du vecteur de courant statorique du moteur ;

- la figure 4 est un diagramme du vecteur de flux rotorique du moteur.

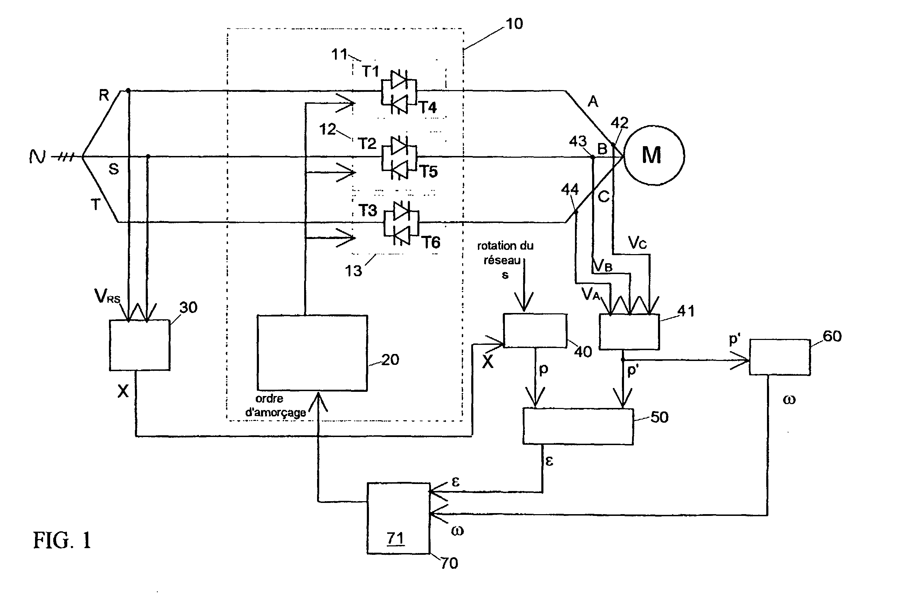

La figure 1 illustre un dispositif de mise en oeuvre du procédé pour le freinage d'un moteur électrique M de type asynchrone triphasé.

Le moteur M est alimenté à partir d'un réseau alternatif par l'intermédiaire d'un gradateur triphasé 10. Le gradateur 10 comprend trois couples d'interrupteurs à semi-conducteurs 11, 12, et 13; chaque couple est constitué de deux thyristors montés tête-bêche T1-T4, T2-T5 ou T3-T6, et dont le point milieu est connecté, du côté entrée, à un conducteur de phase R, S ou T du réseau, et du côté sortie, à un enroulement de phase A, B ou C respectif du moteur M. Les gâchettes des thyristors sont commandées par un circuit de commande 20 ; le circuit 20 rend les thyristors passants à des instants choisis afin de moduler notamment les courants des phases du moteur au démarrage et au ralentissement de celui-ci.

Le dispositif selon l'invention comprend, agencés dans un microcontrôleur, un bloc de synchronisation 30, un bloc d'estimation de position potentielle 40 du vecteur de courant statorique $I_s$ du moteur, un bloc d'estimation de position 41 du vecteur de flux rotorique $\varphi_m$ du moteur, un bloc comparateur 50, un bloc de calcul 60 de la vitesse ω du moteur ainsi qu'un bloc de validation 70 de l'amorçage des thyristors. La sortie du bloc 30 est reliée au bloc 40 ; les blocs 40, 41 sont reliés à leur sortie au bloc 50, les sorties des blocs 50 et 60 sont appliquées à des entrées du bloc 70 dont la sortie est reliée au circuit de commande 20.

Le bloc de synchronisation 30 est relié à des conducteurs R, S du réseau, il reproduit le signal de la tension simple $V_R$ transmise par la phase R du réseau et appliquée à la phase A du moteur à partir de la mesure de la tension composée $V_{RS}$ entre les phases R et S du réseau. Le bloc 30 permet ainsi à partir du signal de la tension simple $V_R$ de déterminer un signal X contenant les informations suivantes : les passages par zéro de la tension simple $V_R$ et la polarité de cette tension simple.

Le bloc d'estimation 40 sert à évaluer la position potentielle p du vecteur de courant statorique $I_s$ si on injectait du courant dans le stator en rendant conducteur des thyristors afin de freiner le moteur. La position p est fonction du retard à l'amorçage $\alpha_c$ des thyristors, des instants de passage par zéro de la tension $V_R$, de la polarité de cette tension, et enfin du sens de rotation s du réseau. Le sens de rotation s du réseau, qui peut être qualifié de direct ou d'inverse, est déterminé de manière connue, à partir par exemple de la mesure des tensions aux bornes des interrupteurs.

Le bloc d'estimation 40 reçoit ainsi une valeur $\alpha_c$ du retard à l'amorçage des thyristors qui est paramétrable suivant la force de freinage désirée, le sens de rotation s du réseau ainsi que le signal X d'informations déterminé par le bloc 30 et significatif de la tension simple de phase $V_R$ du réseau.

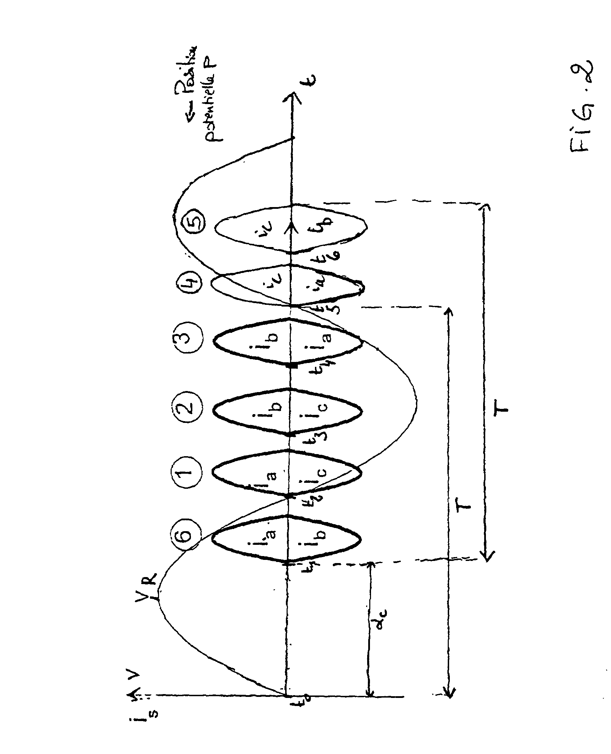

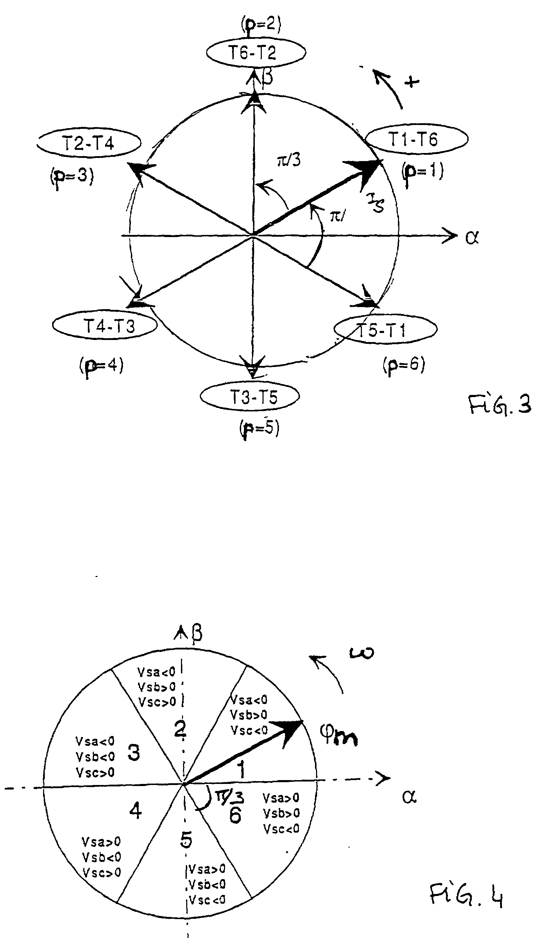

En fonction des instants d'amorçage sur une période du réseau et des ordres d'amorçage associés, le courant statorique $I_s$ peut présenter six positions p distinctes par pas de $\pi/3$ sur une période T du réseau (figures 2 et 3).

En se référant à la figure 2 : soit $t_0$ l'instant de passage par zéro, vers une polarité positive, de la tension de phase $V_R$ du réseau et l'instant sur lequel est synchronisé le retard à l'amorçage $\alpha_c$, à l'instant $t_1 = t_0 + \alpha_c$, les thyristors T1 de la phase A et T5 de la phase B peuvent être amorcés engendrant une polarité positive pour le courant statorique $I_A$ et une polarité négative pour le courant statorique $I_B$, ce qui correspond à une certaine position p du courant statorique $I_s$. Cette position est désignée par convention par $p_6$ ( figure 2).

La position suivante peut correspondre à la fermeture des thyristors T1 et T6, ou bien des thyristors T3 et T5, suivant le sens s direct, ou bien inverse, de rotation du réseau. Si le sens s de rotation est direct, comme celui choisi pour la description qui suit, la position suivante qu'on désignera par $p_1$ correspond à la fermeture des thyristors T1 et T6 ; l'instant d'amorçage $t_2$ de ces thyristors sera égal à $t_0 + \alpha_c + \pi/3$. La prochaine position $p_2$ correspond alors à l'amorçage des thyristors T6 et T2 à l'instant $t_3 = t_0 + \alpha_c + 2\pi/3$.

Puis:

- la position $p_3$ correspond à l'amorçage des thyristors T2 et T4 à l'instant $t_4 = t_0 + \alpha_c + 3\pi/3$ ;

- la position $p_4$ correspond à l'amorçage des thyristors T4 et T3 à $t_5 = t_0 + \alpha_c + 4\pi/3$ ;l'instant

- la position $p_5$ correspond à l'amorçage des thyristors T3 et T5 à l'instant $t_6 = t_0 + \alpha_c + 5\pi/3$

Le bloc 40 estime ainsi, à chaque passage par zéro de la tension simple $V_R$ vers une polarité positive, les six positions potentielles $p_1$ à $p_6$ du courant statorique $I_s$ et les instants associés $t_1$ à $t_6$ d'amorçage potentiel des thyristors. La figure 3 illustre, sur une période du réseau et dans un repère diphasé fixe orthogonal ($\alpha$, $\beta$), l'axe ($\alpha$) étant défini par l'enroulement de phase A du moteur et l'axe ($\beta$) étant disposé à $\pi/2$ en avant de l'axe ($\alpha$), les six positions du courant statorique $I_s$ et les thyristors amorcés correspondants.

Le bloc d'estimation 41 permet, dans le repère ($\alpha$, $\beta$) défini précédemment, de déterminer la position p' du vecteur de flux rotorique $\varphi_m$ en l'absence de courant dans le stator. Le vecteur de flux rotorique $\varphi_m$ étant par définition en avance de $\pi/2$ par rapport au vecteur de tension $V_m$ du moteur et comme on sait, de manière connue, positionner dans le repère ($\alpha$, $\beta$) le vecteur de tension $V_m$, il est donc aisé de positionner le vecteur de flux $\varphi_m$ dans ce même repère.

Des organes de lecture de tension 42, 43 et 44 constitués par des capteurs de tension sont prévus sur les conducteurs de phase respectifs A, B et C et reliées à des entrées du bloc 41. Lorsque le courant statorique $I_s$ est nul, c'est-à-dire lorsque tous les thyristors sont bloqués, les organes de lecture délivrent au bloc 41 des signaux de tensions statoriques $V_A$, $V_B$ et $V_C$ composantes du vecteur de tension $V_m$ du moteur. En fonction de la polarité de chacune des tensions statoriques VA, $V_B$ et $V_c$, le vecteur de tension $V_m$, et par conséquent le vecteur de flux $\varphi_m$, peut prendre sur une période de rotation $T_m$ du moteur six positions différentes. La figure 4 illustre dans le repère ($\alpha$, $\beta$) et sur une période $T_m$ six positions p' que peut prendre le vecteur de flux rotorique $\varphi_m$ sur six portions de temps correspondant chacune à $T_m/6 = \pi/3$. La numérotation des six portions de temps et des positions correspondantes illustrée sur la figure 4 a été choisie de manière à coïncider avec celle des positions du vecteur de courant statorique $I_s$.

Le bloc comparateur 50 reçoit en entrée les positions p du courant statorique $I_s$ et p' du flux rotorique $\varphi_m$ délivrées respectivement par le bloc 40 et par le bloc 41. Il compare ces deux valeurs et fournit en sortie une valeur d'écart de position ε qui est transmise au bloc de validation 70.

Le bloc de calcul 60 de la vitesse ω du moteur reçoit la position p' du flux rotorique $\varphi_m$ et détermine alors la vitesse ω à partir du temps écoulé entre deux changements de position p' du flux en l'absence de courant dans le stator. La vitesse ω est délivrée au bloc de validation 70.

Le bloc de validation 70 de l'amorçage des thyristors permet de déclencher l'ordre d'amorçage réalisé par le circuit de commande 20 lorsque l'on désire freiner. L'ordre d'amorçage pour freiner le moteur M n'est délivré que si le couple électromagnétique $C_m$ du moteur est négatif ; cette condition dépend des valeurs de l'écart ε et de la vitesse ω. A cet effet, le bloc de validation 70 comporte une table interne 71 de correspondance entre des valeurs de l'écart ε et de la vitesse ω pour un couple électromagnétique $C_m$ négatif.

Le fonctionnement du dispositif de freinage va à présent être expliqué.

Le moteur M tourne à une vitesse de régime établi ; lorsque l'on désire le freiner, le gradateur cesse d'amorcer les thyristors, qui sont dès lors bloqués, et active le processus de freinage.

Le bloc d'estimation 41 évalue la position p' du flux rotorique $\varphi_m$, tandis que le bloc 40 estime les positions potentielles p du courant statorique $I_s$ à chaque passage à zéro de la tension simple $V_R$ vers une polarité positive, et les instants d'amorçage potentiel $t_1$ à $t_6$ associés.

Le bloc comparateur 50 reçoit de manière continue la position p' et reçoit à un instant potentiel d'amorçage la position potentielle p ; il compare les positions p et p' et le résultat ε est envoyé au bloc de validation 70 qui reçoit aussi la vitesse ω du moteur. Si les valeurs reçues sont en accord avec la table de correspondance interne 71 du bloc de validation 70 de manière que le couple électromagnétique $C_m$ soit négatif, le bloc 70 donne l'ordre au circuit de commande 20 d'amorcer le couple de thyristors associé à la position p ; s'il y a désaccord entre les valeurs ε et ω, c'est-à-dire si le couple électromagnétique $C_m$ n'est pas négatif, la comparaison des positions p et p' est à nouveau effectuée à l'instant d'amorçage potentiel suivant jusqu'à ce que les valeurs ε et ω reçues par le bloc de validation 70 soient en accord avec la table de correspondance interne 71.

**Revendications**

1. Procédé de freinage d'un moteur polyphasé (M) au moyen d'un gradateur (10) relié d'une part à un réseau alternatif, d'autre part au moteur, et comprenant un circuit de commande (20) et des interrupteurs électroniques (T1, T2, T3, T4, T5, T6) associés aux différentes phases et pilotés par le circuit de commande (20), **caractérisé en ce qu'**il consiste :

   - à déterminer la position (p') du flux rotorique ($\varphi_m$) du moteur, *ce flux rotorique pouvant présenter six positions (p') distinctes sur une période de rotation ($T_m$) du moteur,*

   - à déterminer la position potentielle (p) du courant statorique ($I_s$) du moteur, *ce courant statorique pouvant présenter six positions (p) distinctes sur une période (T) du réseau.*

   - à comparer la position potentielle (p) du courant statorique avec la position (p') du flux rotorique pour en déduire une valeur d'écart de position (ε), et

   - à commander la conduction des interrupteurs électroniques (T1, T2, T3, T4, T5, T6) lorsque le couple électromagnétique ($C_m$) est déterminé négatif.

2. Procédé selon la revendication 1, **caractérisé en ce que** le couple électromagnétique ($C_m$) est déterminé négatif à partir de l'évaluation de la valeur d'écart de position (ε) et de la mesure de la vitesse (ω) du moteur, *au moyen d'une table interne qui effectue une correspondance entre les valeurs d'écart de position (ε) et de mesure de vitesse (ω), pour déterminer si le couple électromagnétique ($C_m$) est négatif.*

3. Procédé selon la revendication 1 ou 2, **caractérisé en ce que** la position (p') du flux rotorique ($\varphi_m$) est déterminée à partir de la mesure des tensions statoriques ($V_A$, $V_B$, $V_C$) sur chacune des phases du moteur en l'absence du courant

4. Procédé selon la revendication 1 ou 2, **caractérisé en ce que** la position potentielle (p) du courant statorique ($I_s$) est déterminée à partir du passage par zéro de la tension simple ($V_R$) d'une phase du réseau, de la polarité de cette tension simple ($V_R$), du retard à l'amorçage ($\alpha_c$) synchronisé sur cette tension ainsi que du sens de rotation (s) du réseau.

5. Dispositif de freinage pour la mise en oeuvre du procédé selon la revendication 1, **caractérisé en ce qu'**il comprend un bloc de synchronisation (30), un bloc d'estimation (40) de la position (p) du courant statorique ($I_s$), un bloc d'estimation (41) de la position (p') du flux rotorique ($\varphi_m$), un bloc comparateur (50) des positions respectives (p, p') du courant statorique et du flux rotorique et un bloc de validation (70) de la commande des interrupteurs électroniques.

**Patentansprüche**

1. Verfahren zur Bremsung eines mehrphasigen Motors (M) mittels eines einerseits an ein Wechselstromnetz und andererseits an den Motor angeschlossenen Sanftanlassers (10), und bestehend aus einem Steuerkreis (20) und elektronischen Schaltern (T1, T2, T3, T4, T5, T6), die mit den verschiedenen Phasen verbunden sind und vom Steuerkreis (20) gesteuert werden, **dadurch gekennzeichnet, dass** es darin besteht:

- die Position (p') des Rotorflusses ($\varphi_m$) des Motors zu bestimmen, wobei dieser Rotorfluss sechs verschiedene Positionen (p') während einer Motorumdrehungsperiode ($T_m$) einnehmen kann,
- die mögliche Position (p) des Statorstroms ($I_s$) des Motors zu bestimmen, wobei dieser Statorstrom sechs verschiedene Positionen (p) während einer Net zumdrehungsperiode (T) einnehmen kann,
- die mögliche Position (p) des Statorstroms mit der Position (p') des Rotorflusses zu vergleichen, um daraus einen Positionsabweichungswert ($\varepsilon$) abzuleiten, und
- die Leitung der elektronischen Schalter (T1, T2, T3, T4, T5, T6) zu steuern, wenn das elektromagnetische Moment ($C_m$) als negativ bestimmt wird.

2. Verfahren nach Anspruch 1, **dadurch gekennzeichnet, dass** das elektromagnetische Moment ($C_m$) von der Auswertung des Positionsabweichungswerts ($\varepsilon$) und der Motorgeschwindigkeitsmessung ($\omega$) ausgehend mittels einer internen Tabelle, welche die Werte der Positionsabweichung ($\varepsilon$) und der Geschwindigkeitsmessung ($\omega$) in Übereinstimmung bringt, um festzustellen, ob das elektromagnetische Moment ($C_m$) negativ ist, als negativ bestimmt wird.

3. Verfahren nach Anspruch 1 oder 2, **dadurch gekennzeichnet, dass** die Position (p') des Rotorflusses ($\varphi_m$) von der Messung der Statorspannungen ($V_A$, $V_B$, $V_C$) während jeder einzelnen Motorphase bei Stromlosigkeit ausgehend bestimmt wird.

4. Verfahren nach Anspruch 1 oder 2, **dadurch gekennzeichnet, dass** die mögliche Position (p) des Statorstroms ($I_s$) vom Nulldurchgang der Strangspannung ($V_R$) einer Netzphase, von der Polarität dieser Strangspannung ($V_R$), von der auf diese Spannung synchronisierten Spätzündung ($\alpha_c$) sowie von der Netzdrehrichtung (s) ausgehend bestimmt wird.

5. Bremsvorrichtung zur Durchführung des Verfahrens nach Anspruch 1, **dadurch gekennzeichnet, dass** sie einen Synchronisierungsblock (30), einen Block (40) zur Schätzung der Position (p) des Statorstroms ($I_s$), einen Block (41) zur Schätzung der Position (p') des Rotorflusses ($\varphi_m$), einen Block (50) zum Vergleich der entsprechenden Positionen (p, p') des Statorstroms und des Rotorflusses und einen Block (70) zur Steuerungsbestätigung der elektronischen Schalter umfasst.

## Claims

1. A braking method for a polyphase motor (M) by means of a soft starter (10) connected to an AC mains network on the one hand, to the motor on the other hand, and comprising a control circuit (20) and electronic switches (T1, T2, T3, T4, T5, T6) associated with different phases and controlled by the control circuit (20), **characterized in that** it consists of:

- determining the position (p') of the rotor flux ($\varphi_m$) of the motor, this rotor flux may have six distinct positions (p') over a period of rotation ($T_m$) of the motor.
- determining the potential position (p) of the stator current ($I_s$) of the motor, this stator current may have six distinct positions (p) over a period (T) of the mains network,
- comparing the potential position (p) of the stator current with the position (p') of the rotor flux in order to derive a position deviation value ($\varepsilon$), and
- controlling the conduction of the electronic switches (T2, T2, T3, T4, T5, T6) when the electromagnetic torque ($C_m$) is determined as negative.

2. The method according to claim 1, **characterized in that** the electromagnetic torque ($C_m$) is determined as negative from the evaluation of the value of the position deviation ($\varepsilon$) and of the measurement of the speed ($\bar{\omega}$) of the motor, by means of in internal table which performs a mapping between the values of the position deviation ($\varepsilon$) and those of the measurement of the speed ($\bar{\omega}$), in order to determine whether the electromagnetic couple ($C_m$) is negative.

3. The method according to claim 1 or 2, **characterized in that** the position (p') of the rotor flux ($\varphi_m$) is determined from the measurement of the stator voltages ($V_A$, $V_B$, $V_C$) on each of the phases of the motor in the absence of current.

4. The method according to claim 1 or 2, **characterized in that** the potential position (p) of the stator current ($I_s$) is determined from the zero-crossing of the single voltage ($V_R$) of a phase of the mains network, the polarity of this single voltage ($V_R$), the firing lag ($\alpha_c$) synchronized on this voltage as well as on the direction of rotation (s) of the mains network.

5. A braking device for implementing the method according to claim 1, **characterized in that** it comprises a synchronization unit (30), a unit (40) for estimating the position (p) of the stator current ($I_s$), a

unit (41) for estimating the position (p') of the rotor flux ($\varphi_m$), a unit (50) for comparing the respective positions (p, p') of the stator current and the rotor flux and a unit (70) for enabling control of the electronic switches.

FIG. 1

FIG. 2

EP 0 823 776 B1

FIG. 3

FIG. 4